# EUROPEAN PATENT APPLICATION

(11) **EP 4 799 786 A1**
(43) Date of publication of application: **02.09.2026**
(21) Application number: 26155808.4
(22) Date of filing: 02.02.2026
(51) Int. Cl.: B29C 33/38, B29C 64/124

(54) **METHODS AND SYSTEMS FORMANUFACTURING MOLDS**

(30) Priority: 31.01.2025 US 202563752001 P
(71) Applicant: Ormco Corporation, Brea, CA 92821 (US)
(72) Inventor: Lais, Haroon, Brea, 92821 (US)
(74) Representative: Cleveland Scott York

(57) **Abstract**

A method and system of manufacturing a mold, such as a dental mold. The mold is 3D printed and is then acid treated. 3D printing includes printing the mold in a bath of resin. Prior to acid treating the method further includes centrifuging the printed mold to remove excess resin. Acid treating includes exposing the printed mold to an acid solution, such as acetic acid. The method and system may include heating liquid on the mold. Following acid treating, the method includes curing the printed mold, such as curing via UV radiation exposure. The method and system may include thermoforming a sheet of thermoplastic over the mold.

## Description

### CROSS-REFERENCE TO RELATED APPLICATION

This application claims priority to U.S. Provisional application No. 63/752,001 filed on January 31, 2025, which is incorporated by reference herein in its entirety.

### FIELD OF THE INVENTION

The present invention generally pertains to additive manufacturing systems and methods and, more specifically, to additive manufacturing systems and methods capable of producing molds from which other products are formed.

### BACKGROUND

Additive manufacturing, such as 3D printing, is well known for enabling production of highly complex structures layer-by-layer with precision and efficiency. For this reason, additive manufacturing is well suited for unique constructions where fine control over the details is necessary. Additive manufacturing methods used to form complex structures from polymers or resins include stereolithography (SLA), digital light processing (DLP), and multi-jet printing (MJP). In resin-based and polymer-based additive manufacturing, the completed product is typically subjected to a post-production curing process whereby the resin or polymer is subjected or further subjected to polymerization, solidifying the resin or polymer and enhancing the structural integrity of the additively manufactured part.

One such application of additive manufacturing is the production of dental molds that mirror the scanned structure of a patient's teeth, gums, and dental arches. These dental molds can be used themselves as dentures or can be used as a mold in a subsequent forming process for the production of dental aligners, mouth guards, or other structures intended to cover a patient's teeth, gums, and dental arches as represented by the dental mold. When producing aligners, it is typical to use a polymer or resin material for the dental mold that requires post-printing curing of the polymer or resin prior to thermoforming a dental aligner over the mold. Precision and accuracy of the surface of the dental mold and quality of that surface is crucial for reproducing detail of a patient's teeth in the aligner for the intended orthodontic treatment. In that regard, defects in the dental mold may be transferred to the aligner produced therefrom.

Accordingly, while additive manufacturing systems are generally successful, there is a need for improved additive manufacturing systems and methods, particularly for producing molds from which other products are formed, such as dental molds for the formatting of dental aligners.

### SUMMARY

The present invention overcomes the shortcomings and drawbacks of methods and systems for 3-D manufacturing systems heretofore known, particularly those systems and methods used in orthodontic appliance manufacturing. While the invention will be described in connection with certain embodiments, it will be understood that the invention is not limited to those embodiments. For example, while embodiments are disclosed with respect to orthodontic aligners and systems and methods for their manufacturing, embodiments are not limited to systems and methods for manufacturing aligners. Embodiments will apply to other manufacturing operations in which products are formed (e.g., thermoformed) over additively manufactured polymer molds. According to embodiments of the invention, identified problems associated with surface quality of an additively manufactured mold, such as a dental mold, are avoided.

To that and other ends, in one aspect of the invention, there is a method of manufacturing a mold, such as a dental mold. According to embodiments of the method the mold is 3D printed and is then acid treated. Acid treatment of the printed mold is believed to improve the quality of the surface of the printed mold. This improved quality is reflected in an improved product manufactured from the printed mold. The product manufactured from the acid treated printed mold is of higher quality than a product manufactured from a printed mold that has not been acid treated. Without being bound by theory, during acid treatment, contamination from the 3D printing process, from the surrounding atmosphere, and found within an uncured resin or uncured polymer surface portion of the printed mold reacts with acid in solution. The acid treatment protects any uncured resin from inadvertent contamination and may facilitate more complete curing in a subsequent curing process. The acid may react with uncured resin so that it is removable or neutralized. The surface of the mold is thereby improved for a later forming operation by which a part formed over the mold is not contaminated by the mold or residue from mold manufacturing. It is contemplated that, after acid treatment, the surface contains less uncured resin. In one embodiment, and by way of example only, the uncured resin or polymer is an acrylate-containing resin or polymer and the acid is a carboxylic acid added to an aqueous solution. In this exemplary embodiment, the uncured resin or polymer includes tripropylene glycol diacrylate (TPGDA) and the carboxylic acid includes acetic acid. The proton (H+) in the acetic acid solution is believed to react with contaminate elements, such as oxygen or oxygen radicals, that are located in an uncured surface portion of the resin or polymer mold. The reaction with oxygen and/or oxygen radicals produce water. The TPGDA and the carboxylate ion (RCOO-) in the acetic acid solution may react to form one or more reaction products, such as tripropylene glycol diacetate, which is soluble in the aqueous solution. The reaction products from the acid treatment are removable from the surface of the printed mold. The reaction rate may be accelerated by heating the acid solution, such as during a period after the acid solution is applied to the mold. Following acid treatment, the acid treated mold is cured, such as by exposure to ultraviolet (UV) radiation. Once treated and cured, a product is formed from the treated printed mold. In an exemplary embodiment, the printed mold is a dental mold and a dental aligner is thermoformed over the treated printed dental mold.

In one embodiment, 3D printing includes printing the mold in a bath of resin. As an example, 3D printing includes exposing a resin to UV radiation. In one exemplary embodiment, the resin is a photosensitive acrylate-based polymer.

In one embodiment, prior to acid treating the method further includes centrifuging the printed mold to remove excess resin.

In one embodiment, acid treating includes exposing the printed mold to an acid solution. For example, acid treating may include spraying the acid solution on the printed mold. In one embodiment, the acid solution includes acetic acid.

In one embodiment, following acid treating, the method further includes heating liquid on the mold. In one embodiment, heating includes removing any residual liquid.

In one embodiment, heating includes exposing the liquid to heat from an infrared heater.

In one embodiment, following acid treating, the method further includes curing the printed mold. As an example, curing includes exposing the printed mold to UV radiation.

In one embodiment, the mold is a dental mold.

According to another aspect, there is a method of manufacturing a dental aligner including the method described above, wherein following acid treatment, the method includes thermoforming a sheet of thermoplastic over the mold.

According to another aspect, there is a system for manufacturing a mold including 3D printing system configured to build the mold layer-by-layer from a resin, and an acid treatment system configured to expose the printed mold to an acid solution.

In one embodiment, 3D printing system includes a bath of resin in which the mold is configured to be built.

In one embodiment, the 3D printing system includes a radiation source.

In one embodiment, the 3D printing system includes a bath of the resin.

In one embodiment, the resin is a photosensitive acrylate-based polymer.

In one embodiment, the acid treatment system includes a nozzle for spraying the acid solution on the printed mold.

In one embodiment, the acid solution includes acetic acid.

In one embodiment, the system further includes a centrifuge configured to remove any residual resin from a printed mold.

In one embodiment, the system further includes an infrared heater for heating the acid treated molds.

In one embodiment, the mold is a dental mold.

According to aspect A of the present invention there is provided a method for manufacturing a mold comprising: 3D printing the mold; and acid treating the printed mold.

Preferably 3D printing includes printing the mold in a bath of resin.

Preferably 3D printing includes exposing a resin to UV radiation.

Preferably the resin is a photosensitive acrylate-based polymer.

Preferably prior to acid treating the method further comprises: centrifuging the printed mold to remove excess resin.

Preferably acid treating includes exposing the printed mold to an acid solution.

Preferably acid treating includes spraying the acid solution on the printed mold.

Preferably the acid solution includes acetic acid.

Preferably following acid treating, the method further comprises: heating liquid on the printed mold.

Preferably heating includes removing any residual liquid.

Preferably heating includes exposing the liquid on the printed mold to heat from an infrared heater.

Preferably following acid treating, the method further comprises: curing the printed mold.

Preferably curing includes exposing the printed mold to UV radiation.

Preferably the printed mold is a dental mold.

According to aspect B of the present invention there is provided a method of manufacturing a dental aligner comprising: the method recited in aspect A of the present invention, wherein following acid treatment, thermoforming a sheet of thermoplastic over the mold.

According to aspect C of the present invention there is provided a system for manufacturing a mold comprising:
3D printing system configured to build the mold layer-by-layer from a resin; and
an acid treatment system configured to expose the printed mold to an acid solution.

Preferably the 3D printing system includes a bath of resin in which the printed mold is configured to be built.

Preferably the 3D printing system includes a radiation source.

Preferably the 3D printing system includes a bath of the resin

Preferably the resin is a photosensitive acrylate-based polymer.

Preferably the acid treatment system includes a nozzle for spraying the acid solution on the printed mold.

Preferably the acid solution includes acetic acid.

Preferably the system further comprises: a centrifuge configured to remove any residual resin from the printed mold.

Preferably the system further comprises: an infrared heater for heating the acid treated molds.

Preferably the mold is a dental mold.

The following numbered clauses provide further disclosure of the embodiments and options, and also indicate potential scopes of protection within the contemplation of the applicant.

Clause 1. A method for manufacturing a mold comprising: 3D printing the mold; and acid treating the printed mold.

Clause 2. The method of clause 1, wherein 3D printing includes printing the mold in a bath of resin.

Clause 3. The method of Clause 1 or Clause 2, wherein 3D printing includes exposing a resin to UV radiation.

Clause 4. The method of Clause 3, wherein the resin is a photosensitive acrylate-based polymer.

Clause 5. The method of any preceding Clause, wherein prior to acid treating the method further comprises: centrifuging the printed mold to remove excess resin.

Clause 6. The method of any preceding Clause, wherein acid treating includes exposing the printed mold to an acid solution.

Clause 7. The method of Clause 6, wherein acid treating includes spraying the acid solution on the printed mold.

Clause 8. The method of Clause 6 or Clause 7, wherein the acid solution includes acetic acid.

Clause 9. The method of any preceding Clause wherein, following acid treating, the method further comprises: heating liquid on the printed mold.

Clause 10. The method of Clause 9, wherein heating includes removing any residual liquid.

Clause 11. The method of Clause 9 or Clause 10, wherein heating includes exposing the liquid on the printed mold to heat from an infrared heater.

Clause 12. The method of any preceding Clause wherein, following acid treating, the method further comprises: curing the printed mold.

Clause 13. The method of Clause 12, wherein curing includes exposing the printed mold to UV radiation.

Clause 14. The method of any preceding Clause, wherein the printed mold is a dental mold.

Clause 15. A method of manufacturing a dental aligner comprising: the method recited in any preceding Clause, wherein following acid treatment, thermoforming a sheet of thermoplastic over the mold.

Clause 16. A system for manufacturing a mold comprising: 3D printing system configured to build the mold layer-by-layer from a resin; and an acid treatment system configured to expose the printed mold to an acid solution.

Clause 17. The system of Clause 16, wherein 3D printing system includes a bath of resin in which the printed mold is configured to be built.

Clause 18. The system of Clause 16 or Clause 17, wherein 3D printing system includes a radiation source.

Clause 19. The system of any of Clauses 16-18, wherein the 3D printing system includes a bath of the resin.

Clause 20. The system of any of Clauses 16-19, wherein the resin is a photosensitive acrylate-based polymer.

Clause 21. The system of any of Clauses 16-20, wherein the acid treatment system includes a nozzle for spraying the acid solution on the printed mold.

Clause 22. The system of Clause 21, wherein the acid solution includes acetic acid.

Clause 23. The system of any of Clauses 16-22, further comprising: a centrifuge configured to remove any residual resin from the printed mold.

Clause 24. The system of any of Clauses 16-23, further comprising: an infrared heater for heating the acid treated molds.

Clause 25. The system of any of Clauses 16-24, wherein the mold is a dental mold.

### BRIEF DESCRIPTION OF THE DRAWINGS

The accompanying drawings, which are incorporated in and constitute a part of this specification, illustrate embodiments of the invention and, together with the general description of the invention given above, and the detailed description given below, serve to explain the principles of the invention. Similar reference numerals are used to indicate similar features throughout the various figures of the drawings.
Fig. 1 is a flowchart of an exemplary method of manufacturing a molded part from an additively manufactured mold according to an aspect of the present invention.
Fig. 2 is a perspective view of spraying a solution onto a printed mold in accordance with one embodiment of the invention.
Figs. 3 and 4 are perspective views of forming a sheet over a printed mold and a formed, molded part (an aligner), respectively, according to one embodiment of the invention.
Fig. 5 is a schematic view of an additive manufacturing system according to one embodiment of the invention.
Fig. 6 is a photograph of a dental aligner with defects from a thermoforming process on a printed mold shown outlined for ease of identification.
Fig. 6A is an SEM micrograph of a defect similar to that shown highlighted in the photograph of Fig. 6.
Figs. 6B and 6C are SEM micrographs of defects in an aligner surface that are associated with thermoforming over an untreated printed mold.
Fig. 7 is a series of graphs demonstrating the independent effects of centrifuge speed, acid percentage, and temperature on clarity of dental aligners.
Fig. 8 is a graph demonstrating the interdependence of centrifuge speed and temperature on clarity of dental aligners.
Fig. 9A is an SEM micrograph of a mold contact surface of an aligner illustrating a visually clear aligner.
Fig. 9B is an SEM micrograph of a mold contact surface of an aligner illustrating defects on and in the aligner surface.
Fig. 10 include four FTIR spectra, one for each of a clear aligner, an outside (non-mold contact surface) of a hazy aligner, a mold contact surface (inside) of a hazy aligner, and Bisphenol-based acrylate resin of a mold material.
Figs. 11A, 11B, 11C, and 11D are FTIR spectra of extraction vehicle obtained from an aligner made according to embodiments of the invention under selected extraction conditions for purified water (Fig. 11A), ethanol (Fig. 11B), and hexane (Figs. 11C and 11D).
Figs. 12A, 12B, 12C, and 12D are FTIR spectra of extraction vehicle obtained from an aligner made according to embodiments of the invention under selected extraction conditions for purified water (Fig. 12A), ethanol (Figs. 12B and 12C), and hexane (Fig. 12D).
Figs. 13A, 13B, 13C, and 13D are FTIR spectra of extraction vehicle obtained from an aligner made according to embodiments of the invention under selected extraction conditions for purified water (Fig. 13A), ethanol (Figs. 13B and 13C), and hexane (Fig. 13D).
Figs. 14A, 14B, and 14C are FTIR spectra of extraction vehicle obtained from an aligner made under selected extraction conditions for purified water (Fig. 14A), ethanol (Fig. 14B), and hexane (Fig. 12C).

### DETAILED DESCRIPTION

In the present invention, methods and systems for manufacturing orthodontic aligners are described. While exemplary systems capable of performing the methods outlined below are described, additional systems will be apparent from the description. In that regard, the methods and systems described solve a problem that the inventors identified. More specifically, inventors identified a source of defects on dental aligners manufactured from additively manufactured dental molds.

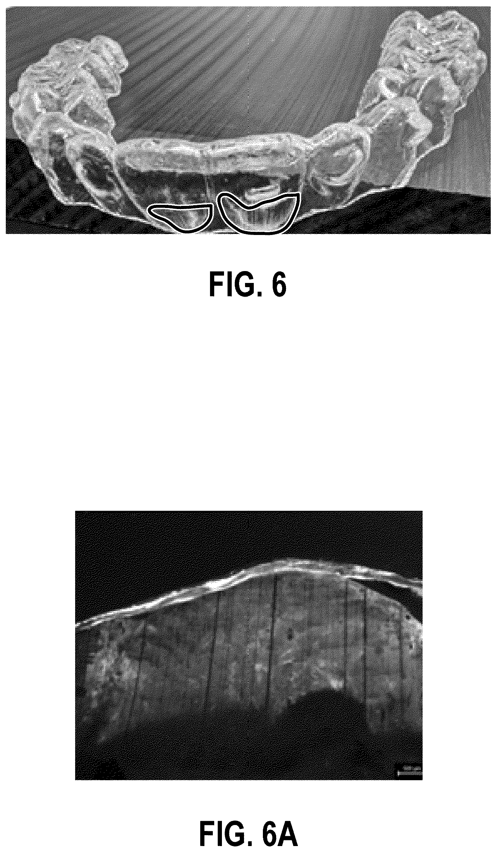

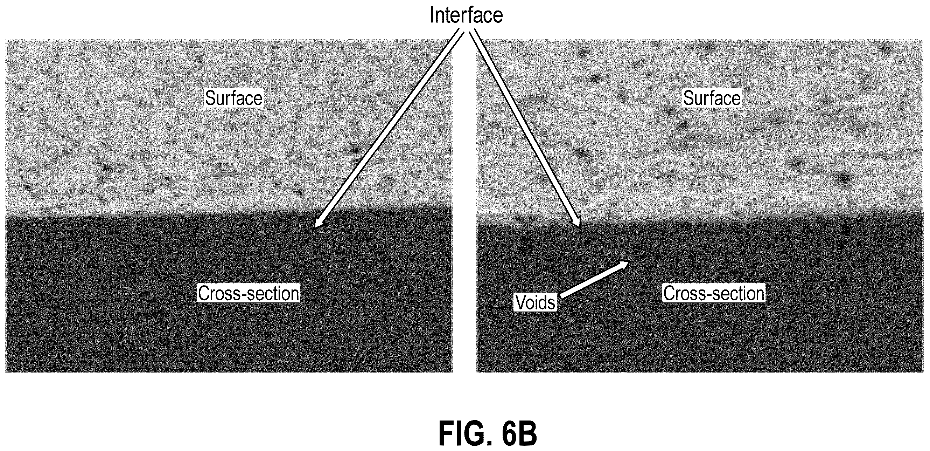

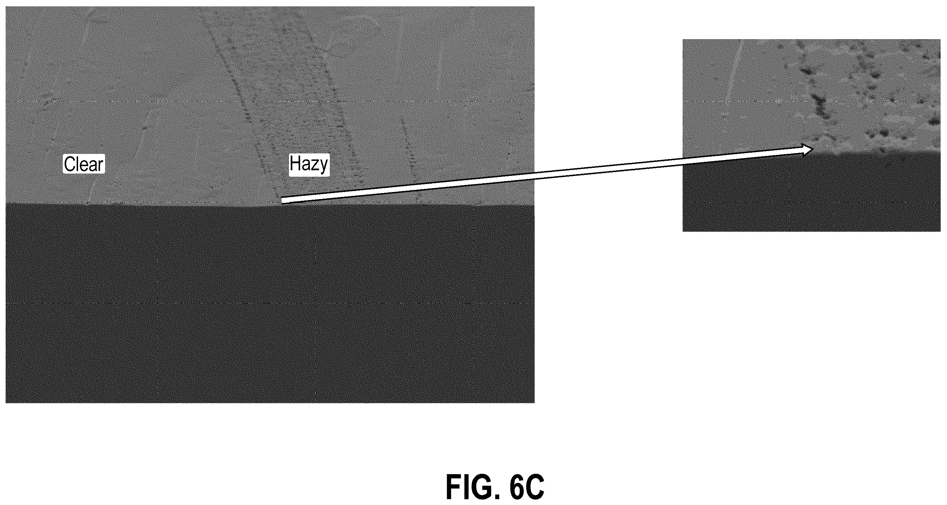

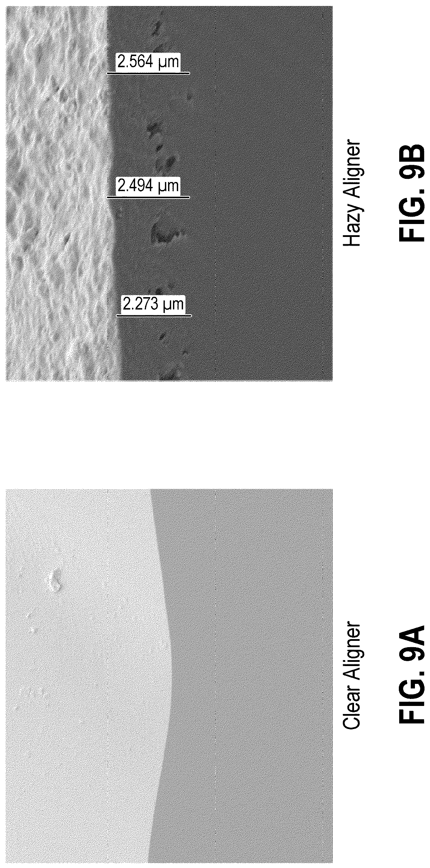

Defects on dental aligners (shown in Figs. 6, 6A, 6B, 6C, and 9B) were identified as being associated with residual uncured resin or polymer or other material on the dental mold following 3D printing of the dental mold and following a standard curing process that followed printing of the dental mold. Fig. 6 depicts a photograph of a dental aligner with defects shown circled. Fig. 6A is a scanning electron microscope (SEM) micrograph with one defect depicted in Fig. 6 enlarged. In each, the exemplary defects in the aligner are on an interior surface of middle anterior tooth cavities. Figs. 6B, 6C, and 9B are SEM micrographs depicting greatly magnified views of the defects shown in Fig. 6. The material of the aligner was a copolyester thermoplastic and the resin utilized to manufacture the mold was an acrylate-based polymer. The defects appear as pits and voids at or near the surface of aligner and visually appear as haziness and/or striations in the aligner. The SEM micrographs are enlarged visual evidence of a chemical reaction in and on the surface of the aligner, which causes the overall haziness defect. The defects in the aligner persisted despite thorough post-printing cure of the printed molds. The defects shown are believed to be due to uncured resin material at the corresponding location on the dental mold (not shown.)

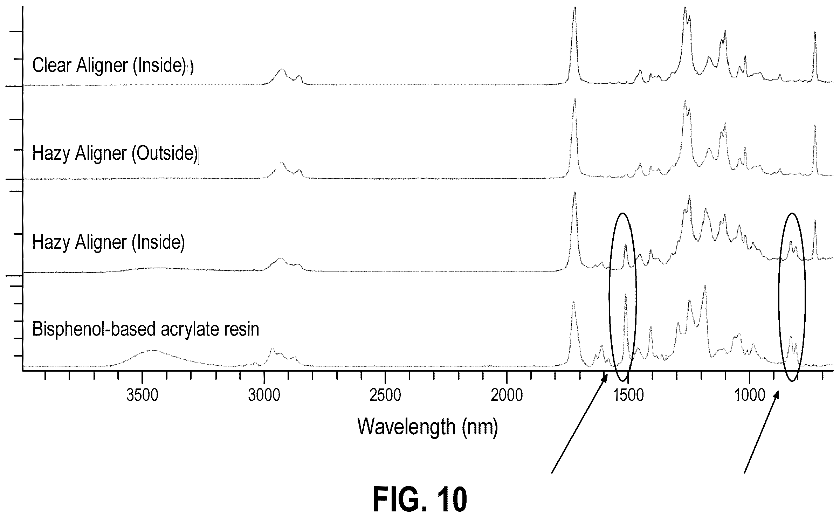

A relationship between the defects on the aligner shown in Figs. 6 and 6A, as examples, and the corresponding mold from which the aligner is formed was established by FTIR (Fourier Transform Infrared) spectroscopy on the aligner at the defect locations. A comparison of FTIR absorbance spectra of various surfaces of aligners relative to a bisphenol-based acrylate resin from which the dental mold was manufactured is shown in Fig. 10.

In Fig. 10, the spectra for the inside and outside surfaces of a hazy aligner formed over the bisphenol-based acrylate resin indicate that a resin of the mold transfers to the mold contact surface with the aligner during forming. This is indicated by the encircled areas in each of the bottom two spectra ("Hazy Aligner (Inside)" and "Bisphenol-based acrylate resin." Absorbance peaks characteristic of the resin appear on the "Hazy Aligner (Inside)" spectrum indicating that the resin transfers to the aligner during forming of the aligner over the mold. As a comparison, the "Clear Aligner" surface of Fig. 9A lacks defects as compared to the surface shown in Fig. 9B. In this example, however, the "Clear Aligner" was formed over a mold of the same bisphenol-based acrylate resin as the "Hazy Aligner" in Fig. 9B. Although formed over a mold of the same resin material as the "Hazy Aligner", the FTIR absorbance spectrum for the "Clear Aligner (Inside)" confirms a lack of a measurable amount of the acrylate resin at this location. The difference between the "Clear Aligner" of Fig. 9A and "Hazy Aligner" of Fig. 9B was that "Clear Aligner" of Fig. 9A was processed according to embodiments of the invention.

To that and other ends, embodiments of the invention treat the surface of the printed dental mold prior to a post-printing cure of the dental mold. The treatment modifies the surface of the printed mold. Surface modification may include removal of contaminates from printing and/or removal of an uncured portion from a surface of the dental mold. Removing contaminates and/or uncured resin from the mold surface improves aligner quality by reducing or eliminating transfer of the contaminates and/or uncured resin from the mold contact surface to the aligner as is described above.

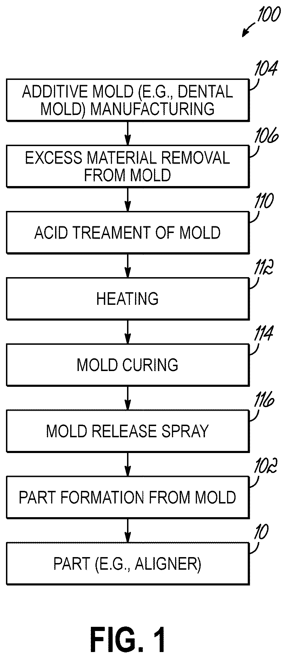

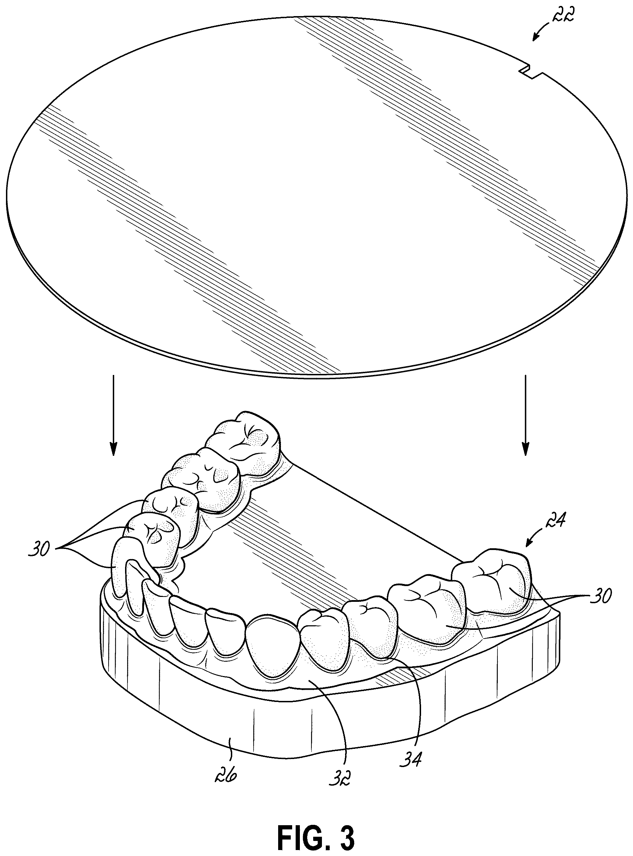

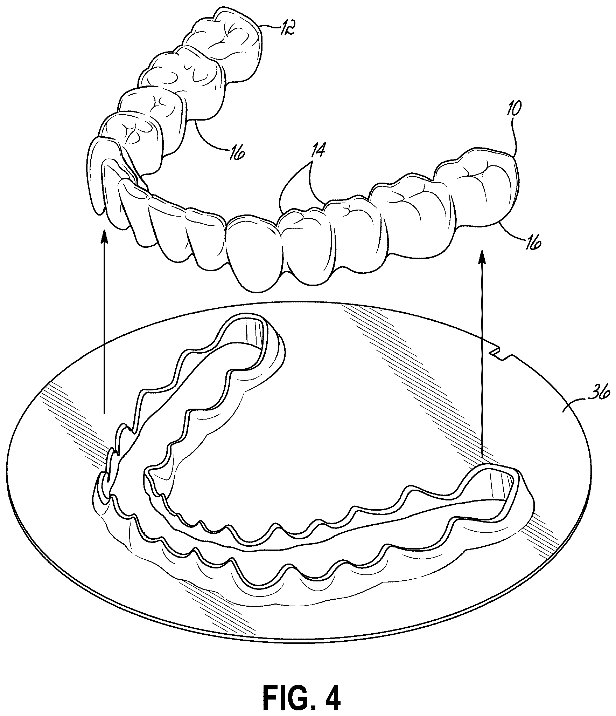

With reference to Figs. 1, 2, 3, and 4, according to one embodiment of the invention, there is a method 100 for manufacturing a dental aligner 10. As shown at 102 in Fig. 1, in one exemplary embodiment, the dental aligner 10 may be manufactured by thermoforming a sheet 22 of thermoplastic material over a dental mold 24. This is shown by way of example with reference to Figs. 3 and 4. With the final formed product (i.e., a dental aligner) in mind, according to embodiments of the invention, in the method 100 of manufacturing the dental aligner 10, individual dental molds 24 in Fig. 3 are additively manufactured at 104.

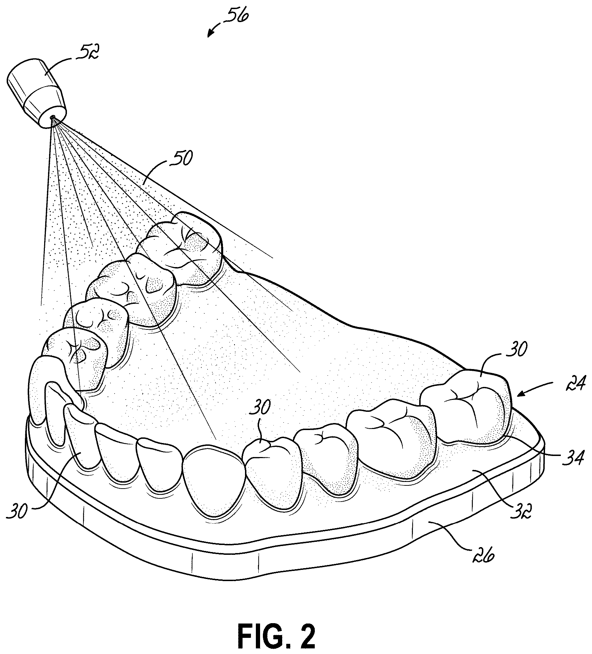

In the flowchart of Fig. 1, embodiments of the invention incorporate one or more additional processes or steps between additive mold manufacturing at 104 and aligner formation from the mold at 102. While the additional processes are disclosed and shown in a specific order, embodiments of the invention contemplate alternative orders. Further, while specific additional processes or steps are described, not all processes and steps are required to improve aligner quality. Further, as referenced herein, a dental mold 24 may be more generally referred to as a mold 24. It will be appreciated that one or more of the methods and systems described herein may be applicable to manufacturing other products from printed molds 24, such as lenses for eyewear (protective, goggles, etc.), covers for light sources, diffusers for light sources, display cases, screen protectors, and display covers to name only a few. In those systems and methods, the additively manufactured mold 24 may have a different shape than the dental mold 24 shown in Figs. 2 and 3 but the mold 24 nevertheless provides a form for the manufacture of a product, such as a dental aligner 10. The formed product includes one or more features of the additively manufactured mold 24. For that reason, the inventive concepts described herein are not limited to manufacturing dental aligners. Rather, embodiments of the systems and methods are applicable to other products.

In the exemplary embodiment shown in Fig. 3, the dental mold 24 may be one of a series of molds each fabricated based on a corresponding computer model of the patient's dentition. Each mold 24 captures a target orientation of the patient's teeth during orthodontic treatment. Each mold 24 is used to manufacture a corresponding aligner 10. As such, for orthodontic treatment, there may be a series of molds 24 to produce a corresponding series of aligners 10 by which the patient's teeth are incrementally moved from their initial position to their final, treated position. The exemplary mold 24 shown may include a base 26 that supports a plurality of projections 30 in the form of model teeth that extend from a model gum 32. A model gingival margin 34 is defined between projections 30 and the model gum 32. As such, after thermoforming the sheet 22 over the mold 24, each model tooth 30 produces a corresponding cavity 14 in the dental aligner 10 with the gingival margin 34 ideally providing a boundary for the edge 16 of the aligner 10 once any waste material 36 is separated from the aligner 10, such as by cutting along the gingival margin 34. The computer model used to manufacture the molds 24 may be generated, for example, based on the patient's initial dentition. The aligners 10 are designed to fit tightly to the patient's teeth and to apply force on individual ones of the patient's teeth while also being clear or nearly clear such that the patient's smile is aesthetically pleasing while the aligner is not readily noticeable during treatment. In that regard, surface defects on the aligners deteriorate the aesthetics of the patient's smile during aligner treatment and any surface defects on the aligner may negatively impact force application to the patient's teeth. Advantageously, embodiments of the invention address these defects on the part formed from the 3D printed mold.

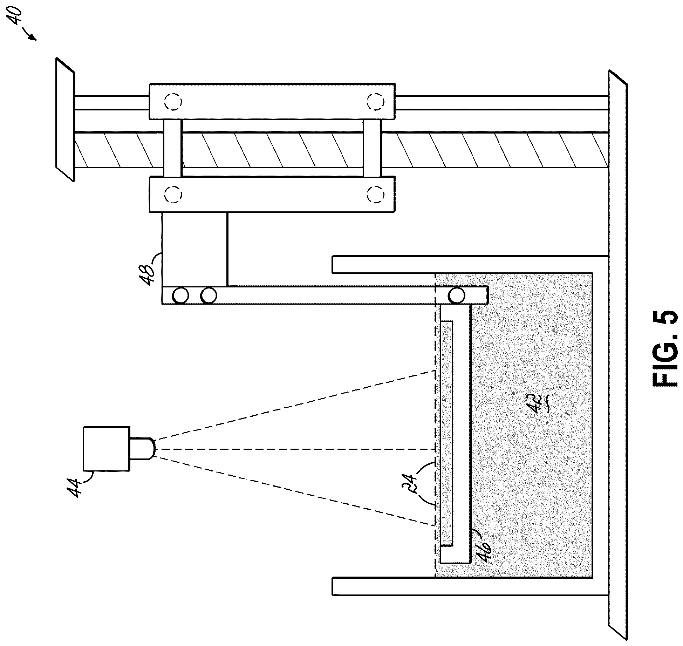

With reference to Figs. 1, 3, and 5, in one embodiment, the molds 24 are additively manufactured. This is shown at 104 in Fig. 1. With reference to Fig. 5, in one embodiment, a 3D printing system 40 may print each of a plurality of the molds 24 from a suitable material, such as a polymer or resin. As an example and with reference to the schematic of Fig. 5, the molds 24 may be printed via vat photopolymerization in which the molds 24 are polymerized layer-by-layer in a bath 42 of fluid resin. To that end, the 3D printing system 40 includes a radiation source 44, which may be a laser capable of rastering across the surface of the bath 42. In the exemplary embodiment, the radiation source 44 is a UV laser operating at 365 nm. Exposure of the resin at the surface of the bath 42 causes the resin to polymerize at the point of exposure. In this way, each mold 42 is constructed layer-by-layer by polymerizing the resin on a build plate 46. The build plate 46 may be lowered by operation of an elevator mechanism 48 into the bath 42 as the mold 12 is built on the build plate 46. Exemplary additive manufacturing systems capable of manufacturing dental molds 24 include those available from Carbon, Inc. Vat polymerization may refer to one or more techniques selected from the list consisting of stereolithography (SLA), liquid crystal display (LCD), and digital light processing (DLP). Other additive manufacturing techniques may be used to manufacture the molds 24 including: material jetting, binder jetting, sheet lamination, powder bed fusion (PBF), and material extrusion. In one embodiment, the additive manufacturing technique is a sheet lamination technique selected from the list consisting of laminated object manufacturing (LOM) and ultrasonic colosidation (UC). In one embodiment, the additive manufacturing technique is a material extrusion technique selected from the list consisting of fused deposition modeling (FDM) and fused granulate modeling (FGM).

Resins for the bath 42 include resins available from Carbon, Inc. headquartered in Redwood City. An exemplary resin is a photosensitive acrylate-based polymer available from Carbon, Inc. Exemplary photosensitive resins or polymers curable using UV light include tri(propylene glycol) diacrylate (TPGDA), bisphenol A epoxy acrylate (BAEA), 1,6-hexanediol diacrylate (HDDA), isobornyl acrylate (IBOA), methyl acrylate, butyl acrylate (BA), ethylhexyl acrylate (EA), ethylene glycol diacrylate (EGDA), trimethylolpropane triacrylate (TMPTA), pentaerythritol tetraacrylate (PETA), diethylene glycol diacrylate (DEGDA), urethane dimethacrulate (UDMA), phosphoric acid monoacrylate, other acrylate-containing resin or polymers, or a combination thereof. Other polymers or resins likely usable for manufacturing the mold 24 include polyvinyl chloride (PVC), polystyrene (PS), acetonitrile butadiene styrene (ABS), polylactic acid (PLA), polyethylene terephthalate (PET), PET glycol (PETG), polyamide (PA, aka nylon), polycarbonate (PC), polyoxymethylene (POM), thermoplastic polyurethane (TPU), polylactic acid (PLA), polyphenylene sulfide (PPS), or polyamideimide (PAI) to name a few.

In the exemplary embodiment, the radiation source 44 selectively emits UV radiation to cure the resin in the bath 42 in the form of the dental mold 24. To do so, a photoinitiator may be present in the bath 42, which may increase the amount of free radicals available to drive polymerization of the resin. In exemplary embodiments, the photoinitiator may be selected from benzoin methyl ether (BME), diphenyl(2,4,6-trimethylbenzoyl)phosphine oxide (TPO), ethylphenyl(2,4,6-trimethylbenzoyl)phosphinate (TPO-L), Phenylbis (2,4,6-trimethylbenzoyl) phosphine oxide (BAPO), other similar photoinitiators, or a combination thereof.

Following printing of the mold 24 at 104 and before forming the aligner 10 from the mold 24 at 102, residual resin from the bath 42 that clings on each mold 24 is removed. In the method 100, excess resin is removed at 106. By way of example, the molds 24 are removed from the resin bath 42 and centrifuged or spun at at least 100 rpm and less than or equal to 700 rpm for a short time, for example, less than a few minutes (e.g., 5 min). By way of further example, the molds 24 may be rotated at 600-650 rpm for from 2 to 4 minutes. Alternative or additional removal processes are contemplated, including any single one or a combination of wiping, brushing, and vibrating the molds 24 by which a bulk of residual uncured resin is separated from one or more of the molds 24. While the removal process removes a bulk portion of unused resin from the molds 24, it is contemplated that there remains residual material, such as a residual portion of uncured or partially cured resin, on the molds 24. Stated in another way, removal of residual excess resin at 106 immediately following printing of the molds 24 fails to remove the entirety of the resin from each of the molds 24. That is, there remains a surface residue on one or more of the molds 24.

With reference to Figs. 1 and 2, following excess resin removal at 106, the mold 24 is acid treated at 110. During acid treatment, the mold 24 is exposed to an acid solution 50. By way of example only, the acid solution 50 may include an acid in water. The acid may be present in amount greater than or equal to 1%. The amount may be dependent on the type of acid in the acid solution. For acid solution containing acetic acid, the solution may be from 1 % to 50% acetic acid or from 5% to 30% acetic acid.

By the exposure to the acid solution 50, residual uncured resin or material not removed during the removal process at 106 may be removed during a subsequent drying process and/or more completely cured during a subsequent curing process, each described below. In particular, it is contemplated that the acid converts uncured resin or other material to a material that is removable during drying and/or the acid reacts with contaminate elements and thereby facilitates curing of any residual uncured resin or material at the surface of the mold 24 in a subsequent curing process.

As one example of exposing the mold 24 to the acid solution, the acid solution 50 may be sprayed from a nozzle 52 onto each mold 24, such as on the projections 30 as is shown in Fig. 2. The nozzle 52 may be one component of an acid treatment system 56 configured to spray the mold 24 with acid solution 50. Spraying the mold 24 may cover only selected portions of the mold 24, such as only the projections 30. Advantageously, targeted spraying of selected portions (i.e., less than the entirety) of the mold 24 may reduce consumption of the acid solution 50 or have other benefits. For example, controlling the location of acid solution 50 placement may reduce overcuring of portions of the mold 24. As another example of applying the acid solution 50, exposure may include temporarily submerging (i.e., dunking) the mold 24 in a bath (not shown) of the acid solution 50. Other methods for application of the acid solution 50 are contemplated. Embodiments of the invention are not limited to spraying (as shown) or submerging in an acid solution. Through its application, such as by spraying or submerging/dipping, the acid solution 50 may coat the mold 24.

In one embodiment, the acid content of the acid solution 50 may vary but is present in a suitable amount to facilitate one or more of curing uncured resin or polymer during a subsequent cure (described below) and/or reacting with uncured resin or other material. Reacting the uncured resin on the mold 24 may produce a product that is removable prior to forming the aligner 10 at 102 or otherwise is inert in that forming process. In the exemplary embodiment in which the acid solution 50 is acetic acid and the mold 24 is formed from tri(propylene glycol) diacrylate (TPGDA), the acetate anion (i.e., CH₃COO⁻) present in the acid solution may react with the acrylate group of TPGDA to form one or more compounds that are more easily removable from the surface of the mold 24 with or in water, for example. Without being bound by theory, the reaction of acetic acid with TPGDA is believed include formation of tripropylene glycol diacrylate (TPG-diacetate) and water according to the following:

TPGDA + 2 CH₃COOH (acetic acid) -> TPG-diacetate + 2 H₂O

The TPG-diacetate is soluble in water. In summary, during acid treatment with the acid solution 50 at 110 in Fig. 1, residual resin on the mold 24 from additive mold manufacturing at 104 may be reacted to form a reaction product that is solubilized in water.

As an alternative or additional advantage to acid treatment, with the acid solution 50 coating or forming a layer on the mold 24, the solution 50 provides a physical barrier to atmospheric contaminates. For example, any gases in the atmosphere, such as oxygen and any ozone created by UV exposure, do not have direct contact with the surface of the mold 24. For this reason, an inert atmosphere is not required in a post-print cure (described below). Further, when the acetic acid disassociates in solution, the proton (H⁺) from the acid protects the mold 24 from any oxygen, including oxygen radicals, present by reacting with oxygen to form water. The proton (H⁺) may also scavenge any oxygen or negatively charged radicals (e.g., oxygen radical), which have diffused into any residual uncured resin on the mold 24 or into a cured surface of the mold 24. The acetate anion in the acid solution 50 may also participate in a reaction with oxygen and/or ozone to form water and oxygen gas. Acid treatment at 110 is therefore thought to prevent oxygen-type contamination of any uncured resin or polymer making that residual uncured resin or polymer more easily cured.

In addition, or alternatively to acetic acid, the acid in the acid solution 50 may be one or more of formic acid, propionic acid, butyric acid, valeric acid, caproic acid, enanthic acid, caprylic acid, pelargonic acid, capric acid, and other straight-chain saturated carboxylic acids. Carboxylic acids may be slightly modified including halogen modification (e.g., chloroformic acid, fluoracetic acid, difluoroacetic acid, trifluoroacetic acid, chloroacetic acid, di chloroacetic acid, tri chloroacetic acid), dicarboxylic acids (e.g., oxalic acid, propanedioic acid, butanedioic acid, pentanedioic acid, etc.), tricarboxylic acids (e.g., citric acid), other functional group modifications, or combinations of those modifications. More complex carboxylic acids may be used. By way of example only, these may include amino acids (e.g., glycine), benzoic acids (e.g., benzoic acid, trismeric acid), other complex carboxylic acids, or a combination thereof. Other suitable acids may include hydrochloric acid, sulfuric acid, nitric acid, phosphoric acid, perchloric acid, boric acid, or a combination thereof.

In an exemplary embodiment, following acid treatment at 110 in Fig. 1, at 112, the method may include heating the acid solution 50. While room temperature (i.e., 21 °C) is sufficient for the above reactions to occur, heating the acid solution 50 on the mold 24 may accelerate reaction of the acid with contaminants and with residual uncured resin. In addition, reaction products, such as water, may be removed at 112 due to evaporation. Heating of the acid solution 50 may include exposing the acid solution 50 on the mold 24 to heat from one or more of an infrared heat source, a natural convection heat source, or a forced-air convection heat source. By way of example, following acid treatment at 110, the mold 24 with the acid solution 50 may be exposed to an infrared heater. By way of example only, temperatures during heating may be greater than or equal to about 100 °C and less than or equal to about 300 °C for a few minutes. In one embodiment, an oven may be set to a temperature from 150 °C to 250 °C for 1 to 2 minutes.

With continued reference to Fig. 1, in one embodiment, following heating, the method 100 includes curing the mold 24 at 114. Curing polymerizes any uncured resin or polymer material on the surface of the mold 24. In embodiments in which the mold 24 is printed using a photosensitive resin or polymer, curing includes exposing the mold 24 to a UV light source. UV curing may be conducted in an atmosphere containing oxygen gas, (e.g., air) with the acid solution 50 present on the surface of the mold 24. In this way, while UV exposure in air may lead to the formation of oxygen radicals, which were identified as interfering with photoinitiators (e.g., TPO), it is believed that the presence of the acid solution 50 at the surface of the mold 24 during curing shields any photoinitiator during curing. That is, the acid in solution preferentially reacts with any oxygen radicals formed by exposure of oxygen in the air to remove undesirable reactants present at any uncured portion of the mold 24. According to embodiments of the invention, more photoinitiator is then available to initiate polymerization of any uncured resin or polymer material at the surface of the mold 24. Curing may alternatively be conducted in the absence of oxygen, for example, in an inert atmosphere or in an oxygen-depleted (i.e., reducing) atmosphere.

Following curing at 114, with reference to Fig. 1, in the exemplary embodiment, the method 100 may include spraying a mold release on the molds 24 at 116. The mold release coats the mold 24, particularly the projections 30 (Fig. 2), and is configured to reduce the friction between the mold 24 and the worksheet 22 shown, for example, in Fig. 3 during thermoforming of the worksheet 22 over the mold 24. The composition of the mold release is not particularly limiting and may depend on the configuration of the mold and material to be formed.

In order to facilitate a more complete understanding of the invention, the following non-limiting examples are provided.

### EXAMPLES

Dental aligners were thermoformed over dental molds prepared according to the following:
Carong L13D Printer with resin: Tripropylene glycol diacrylate with Diphenyl(2,4,6-trimethylbenzoyl)phosphine oxide photoinitiator.

With reference to Fig. 1, variations were made for mold manufacturing for excess resin removal at 106, acid treatment % at 110, and heating (oven temperature) at 112 according to the following:
Following printing, the molds were centrifuged on a Heizen Centrifuge at 625 rpm for run time of 120 seconds and 200 seconds.

Acetic acid % of 5% and 30% were sprayed via a hand sprayer onto the molds following centrifuging.

Following acid spraying, the molds were placed into an oven at temperatures 165 °C and 225 °C for 1 to 2 minutes.

The molds where then exposed to 365 nm to 405 nm UV radiation for one minute with an American Ultra Violet Multicure system.

Aligners of a copolyester polymer were formed over each mold made according to the parameters above.

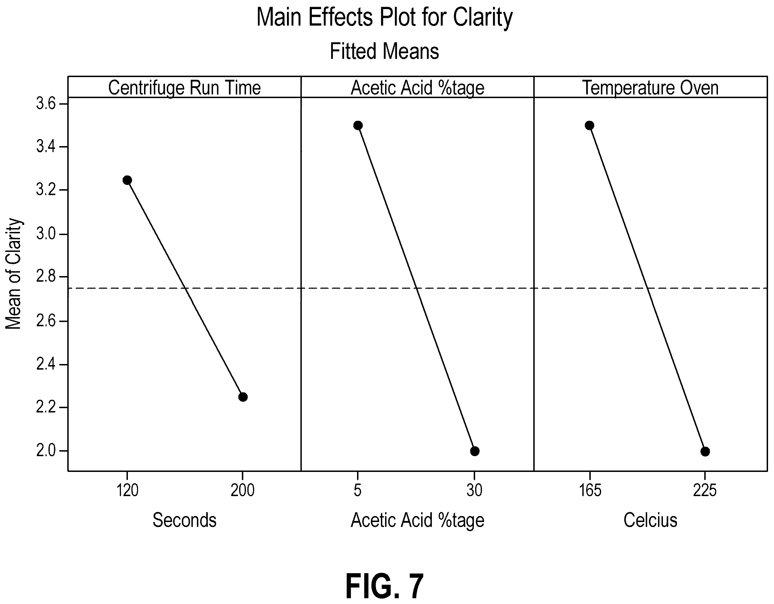

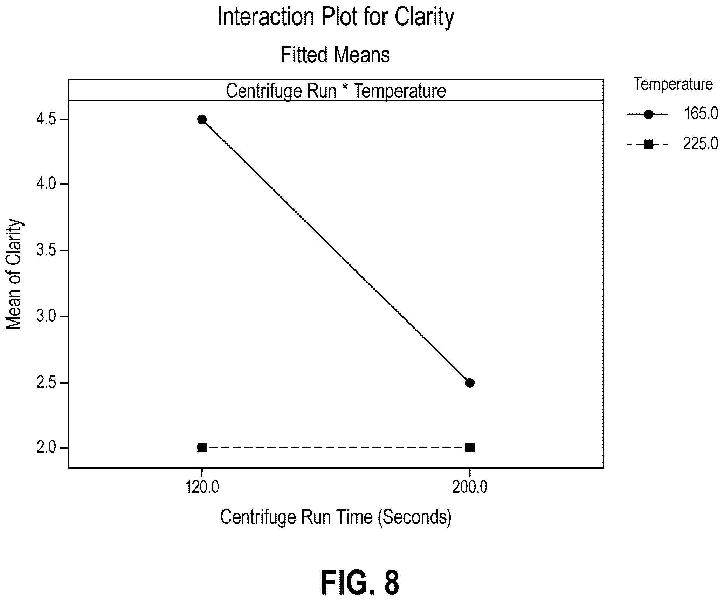

With reference to Figs. 7 and 8, following aligner formation, each aligner was inspected and assigned a clarity value from 1 to 5 based on visual inspection by one individual. Visual inspection was conducted with naked eyes at 18 inches per Internal Visual Inspection Standard. Better clarity is indicated by a lower number with a "1" being of the highest clarity and a "5" being the most hazy.

With respect to centrifuge speed, Fig. 7 shows that aligner clarity increased as centrifuge time increased from 120 second to 200 seconds at 625 rpm. With respect to acetic acid percentage, Fig. 7 clearly shows that aligner clarity increased as acetic acid percentage increased from 5% to 30%. With respect to temperature, Fig. 7 clearly shows that aligner clarity increased as oven temperature increased from 165 °C to 225 °C.

With respect to Fig. 8, the interdependence of centrifuge time and oven temperature is shown. Increasing the centrifuge time from 120 seconds to 200 seconds improved the clarity for 165 °C, but not for 225 °C.

Fig. 9A depicts an enlarged image of an inner surface of a clear aligner made according to embodiments of the invention.

### Example: Aligner material - Zendura FLX

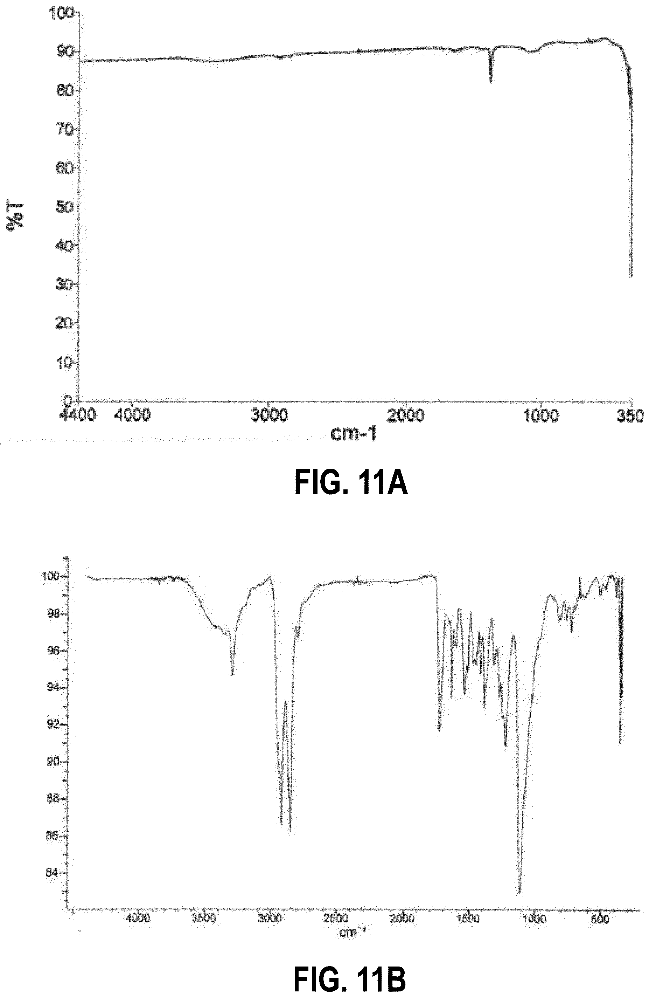

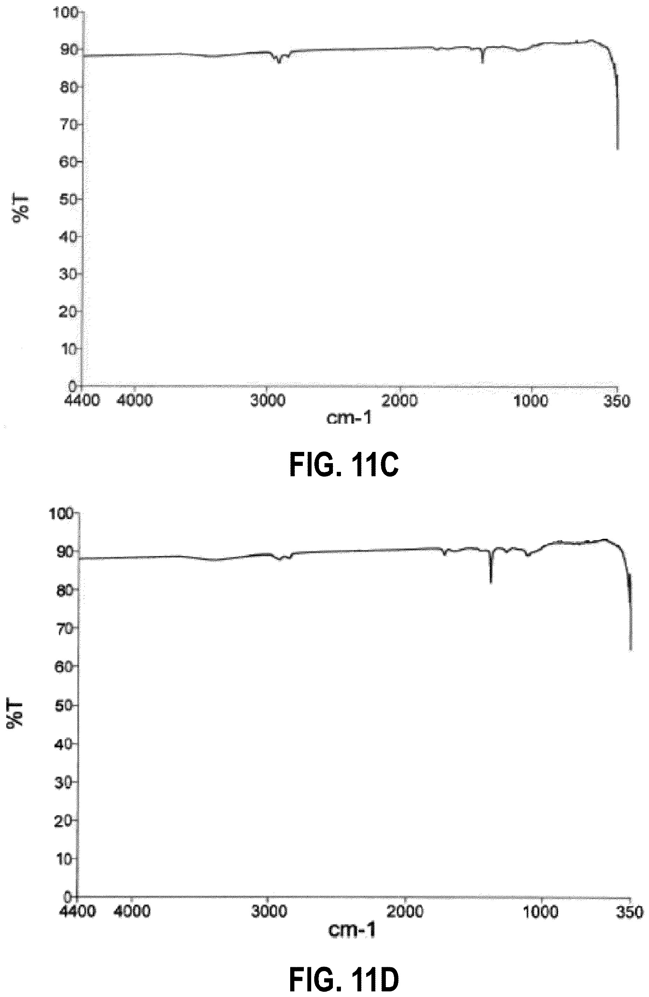

Figs. 11A, 11B, 11C, and 11D are FTIR spectra of an extraction vehicle (e.g., purified water, ethanol, and hexane) after exposure of an aligner produced from a mold that was acid treated. The extraction was conducted as defined by ISO 10993-12 and -18. The aligner of Zendura FLX was subjected to the extraction conditions in the table below. The extraction vehicles were agitated either continuously at 50 PRM or manually at least two time during each 24 hour period during the extraction. At the appointed time extraction vehicle was withdrawn from the test and subject to FTIR. According to each of Figs. 11A, 11B, and 11D, no major bands are visible in the spectra. For Ethanol, Fig. 11C extract residues contained infrared active species. See Table 4 below.

**Table 1: Extraction Parameters**

| Vehicle | Extraction Ratio | Extraction Conditions | Article Amount (cm²) | Prepared Article Weight (g) | Number of Test Articles | Volume of Vehicle (mL)* | Analytically Significant Number of Extractions |
|---|---|---|---|---|---|---|---|
| Purified Water | 6 cm²:1 mL | 50°C for 72 hours | 288 | 9.2 | 8 | 200 | 1 |
| Ethanol | 6 cm²:1 mL | 50°C for 72 hours | 288 | 9.0 | 8 | 200 | 1 |
| Hexane | 6 cm²:1 mL | 50°C for 72 hours | 288 | 9.3 | 8 | 200 | 4 |

**Table 2: Aligner and Extract Observations**

| Vehicle | Time Observed | Extract | Condition of Extracts | | | Condition of Test Article |
|---|---|---|---|---|---|---|
| | | | Color | Clarity | Particulates | |
| Purified Water | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |
| Ethanol | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |
| Hexane | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |

**Table 3: Exhaustive Endpoint Determination; Non-volatile residue**

| Time Point | Non-Volatile Residue (NVR) | | | | | |
|---|---|---|---|---|---|---|
| | Purified Water | | Ethanol | | Hexane | |
| | mg | mg/test article | mg | mg/test article | mg | mg/test article |
| 1 | ≤0.4 | ≤0.1 | 3.7 | 0.5 | 1.3 | 0.2 |
| 2 | ≤0.4 | ≤0.1 | ≤0.4 | ≤0.1 | 1.3 | 0.2 |
| 3 | | -- | -- | -- | 3.8 | 0.5 |
| 4 | -- | -- | -- | -- | 0.7 | 0.09 |
| 5 | -- | -- | -- | -- | ≤0.4 | ≤0.05 |
| Analytical NVR* | ≤0.4 | ≤0.1 | 3.7 | 0.5 | 7.1 | 0.9 |

**Table 4: Result of Infrared Analysis**

| Vehicle | Time Point | Observation |
|---|---|---|
| Purified Water | Time Point 1 | No major bands |
| Ethanol | Time Point 1 | Most closely matches Thermoplastic polyether polyurethane elastomer |
| Hexane | Time Point 1 | No major bands |
| | Final Time Point | No major bands |

### Example: Aligner material - DA001

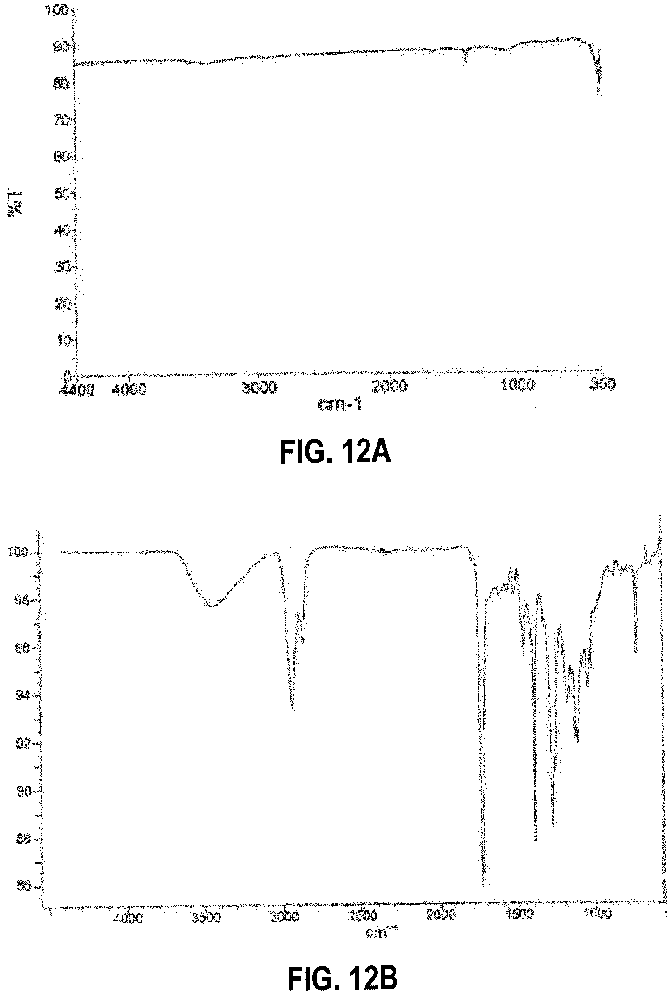

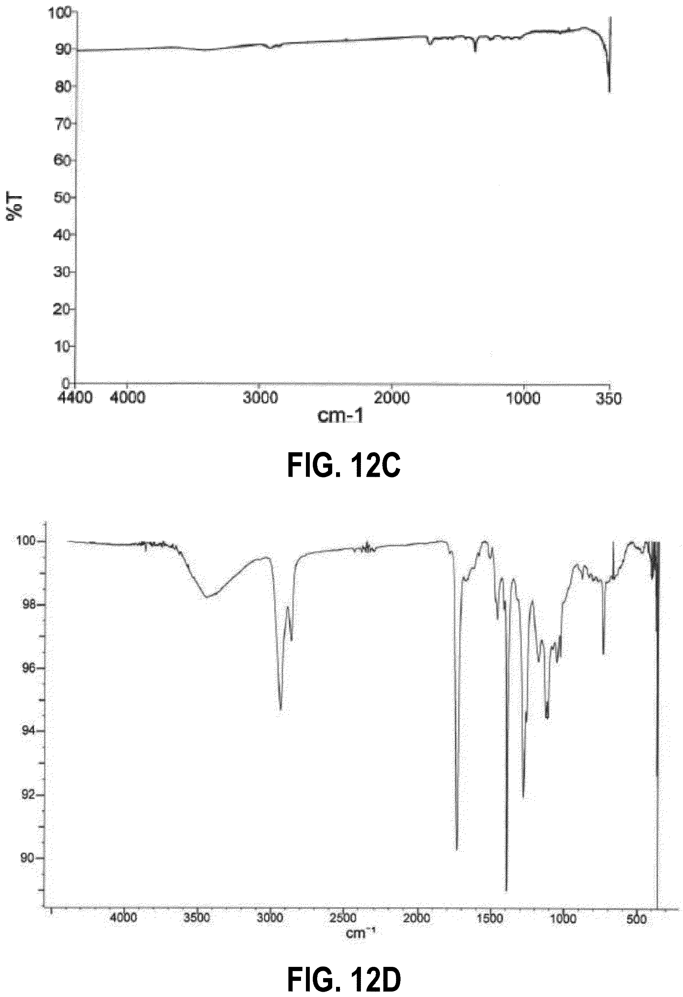

Figs. 12A, 12B, 12C, and 12D are FTIR spectra of an extraction vehicle (e.g., purified water, ethanol, and hexane) after exposure of an aligner produced from a mold that was acid treated. The extraction was conducted as defined by ISO 10993-12 and -18. The aligner of DA001 was subjected to the extraction conditions in the table below. The extraction vehicles were agitated either continuously at 50 PRM or manually at least two time during each 24 hour period during the extraction. At the appointed time extraction vehicle was withdrawn from the test and subject to FTIR. No major bands were observed in the purified water spectra (Fig. 12A). The ethanol (Figs. 12B and 12C) and hexane (Fig. 12D) extraction vehicles contained infrared species. See Table 8 below.

**Table 5: Extraction Parameters**

| Vehicle | Extraction Ratio | Extraction Conditions | Article Amount (cm²) | Prepared Article Weight (g) | Number of Test Articles | Volume of Vehicle (mL)* | Analytically Significant Number of Extractions |
|---|---|---|---|---|---|---|---|
| Purified Water | 6 cm²:1 mL | 50°C for 72 hours | 288 | 9.4 | 8 | 200 | 1 |
| Ethanol | 6 cm²:1 mL | 50°C for 72 hours | 288 | 9.2 | 8 | 200 | 3 |
| Hexane | 6 cm²:1 mL | 50°C for 72 hours | 288 | 9.2 | 8 | 200 | 1 |

**Table 6: Aligner and Extract Observations**

| Vehicle | Time Observed | Extract | Condition of Extracts | | | Condition of Test Article |
|---|---|---|---|---|---|---|
| | | | Color | Clarity | Particulates | |
| Purified Water | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |
| Ethanol | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |
| Hexane | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |

**Table 7 Exhaustive Endpoint Determine; Non-Volatile Residue**

| Time Point | Non-Volatile Residue (NVR) | | | | | |
|---|---|---|---|---|---|---|
| | Purified Water | | Ethanol | | Hexane | |
| | mg | mg/test article | mg | mg/test article | mg | mg/test article |
| 1 | ≤0.4 | ≤0.05 | 3.7 | 0.3 | 1.3 | 0.2 |
| 2 | ≤0.4 | ≤0.1 | 1.0 | ≤0.4 | ≤0.4 | 0.1 |
| 3 | | -- | 1.1 | 0.1 | -- | -- |
| 4 | -- | -- | ≤0.4 | ≤0.05 | -- | -- |
| Analytical NVR* | ≤0.4 | ≤0.1 | 5.7 | 0.7 | 1.3 | ≤0.4 |

**Table 8 Infrared Analysis**

| Vehicle | Time Point | Observation |
|---|---|---|
| Purified Water | Time Point 1 | No major bands |
| Ethanol | Time Point 1 | Most closely matches Phthalic alkyd modified with phenolic resin |
| | Final Time Point | No major bands |
| Hexane | Time Point 1 | Most closely matches Phthalic alkyd modified with phenolic resin |

### Example: Aligner material - MP100

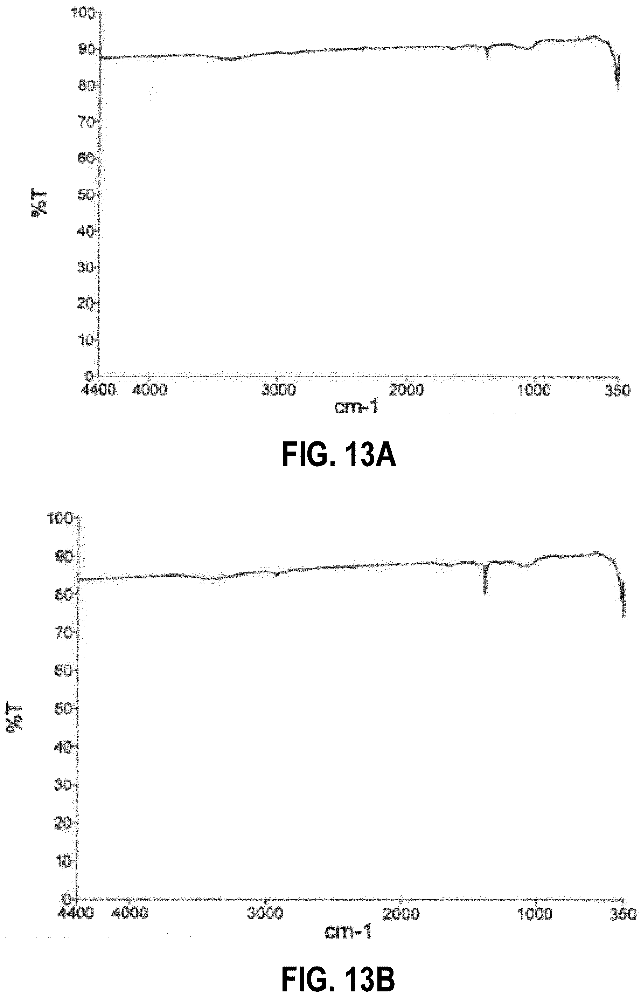

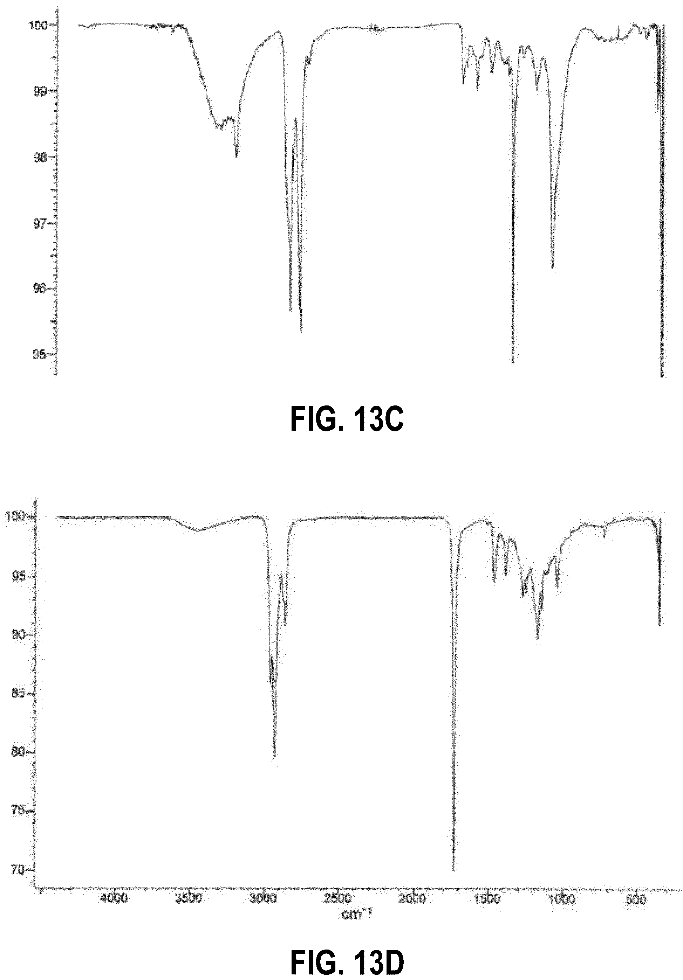

Figs. 13A, 13B, 13C, and 13D are FTIR spectra of an extraction vehicle (e.g., purified water, ethanol, and hexane) after exposure of an aligner produced from a mold that was acid treated. The extraction was conducted as defined by ISO 10993-12 and -18. The aligner of DA001 was subjected to the extraction conditions in the table below. The extraction vehicles were agitated either continuously at 50 PRM or manually at least two time during each 24 hour period during the extraction. At the appointed time extraction vehicle was withdrawn from the test and subject to FTIR. No major bands were observed in the purified water spectra (Fig. 13A). The ethanol (Figs. 13B and 13C) and hexane (Fig. 13D) extraction vehicles contained infrared species. See Table 12 below.

**Table 9 Extraction Parameters**

| Vehicle | Extraction Ratio | Extraction Conditions | Article Amount (cm²) | Prepared Article Weight (g) | Number of Test Articles | Volume of Vehicle (mL)* | Analytically Significant Number of Extractions |
|---|---|---|---|---|---|---|---|
| Purified Water | 6 cm²:1 mL | 50°C for 72 hours | 288 | 9.5 | 8 | 200 | 1 |
| Ethanol | 6 cm²:1 mL | 50°C for 72 hours | 288 | 9.4 | 8 | 200 | 2 |
| Hexane | 6 cm²:1 mL | 50°C for 72 hours | 288 | 910.1 | 8 | 200 | 1 |

**Table 10 Aligner and Extract Observations**

| Vehicle | Time Observed | Extract | Condition of Extracts | | | Condition of Test Article |
|---|---|---|---|---|---|---|
| | | | Color | Clarity | Particulates | |
| Purified Water | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |
| Ethanol | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |
| Hexane | Before Extraction | Test | Colorless | Clear | None | |
| | | Control | Colorless | Clear | None | |
| | After Extraction | Test | Colorless | Clear | None | The test article remained visibly unchanged. |
| | | Control | Colorless | Clear | None | |

**Table 11 Exhaustive Endpoint Determine; Non-Volatile Residue**

| Time Point | Non-Volatile Residue (NVR) | | | | | |
|---|---|---|---|---|---|---|
| | Purified Water | | Ethanol | | Hexane | |
| | mg | mg/test article | mg | mg/test article | mg | mg/test article |
| 1 | ≤0.4 | ≤0.05 | 1.4 | 0.2 | 6.7 | 0.8 |
| 2 | ≤0.4 | ≤0.1 | 1.1 | ≤0.4 | ≤0.4 | ≤0.4 |
| 3 | | -- | ≤0.4 | ≤0.05 | -- | -- |
| Analytical NVR^{*} | ≤0.4 | ≤0.1 | 2.4 | 0.3 | 6.7 | 0.8 |

**Table 12 Infrared Analysis**

| Vehicle | Time Point | Observation |
|---|---|---|
| Purified Water | Time Point 1 | No major bands |
| Ethanol | Time Point 1 | No major bands |
| | Final Time Point | Most closely matches poly(ethylene glycol) average Mn 600 |
| Hexane | Time Point 1 | Most closely matches butyl sebacate (ATR Corrected) |

### Comparative Example

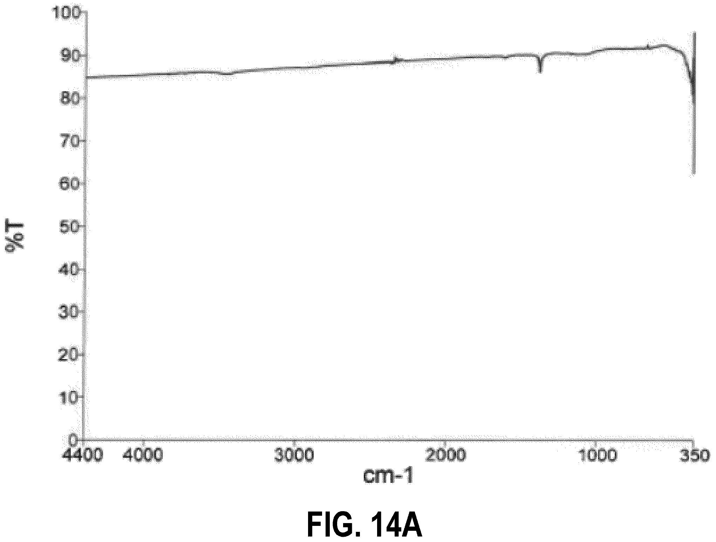

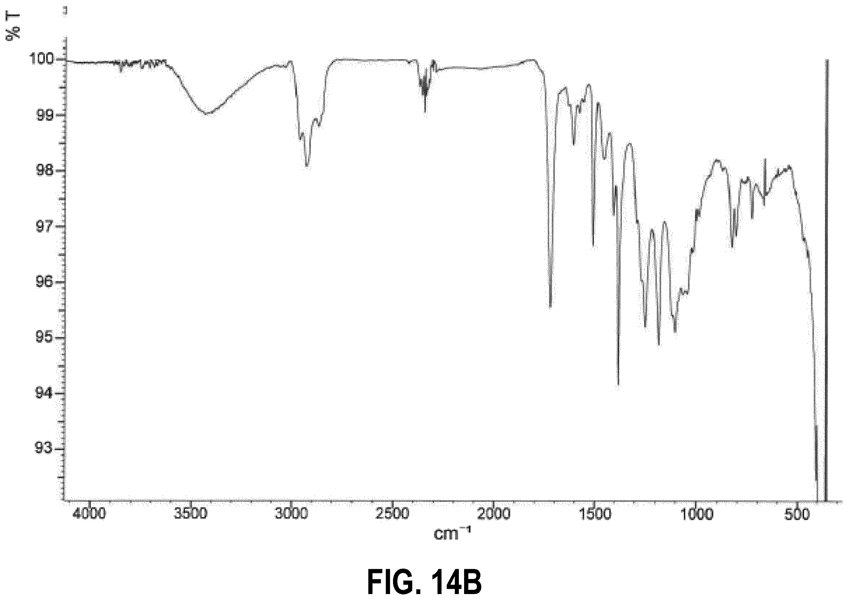

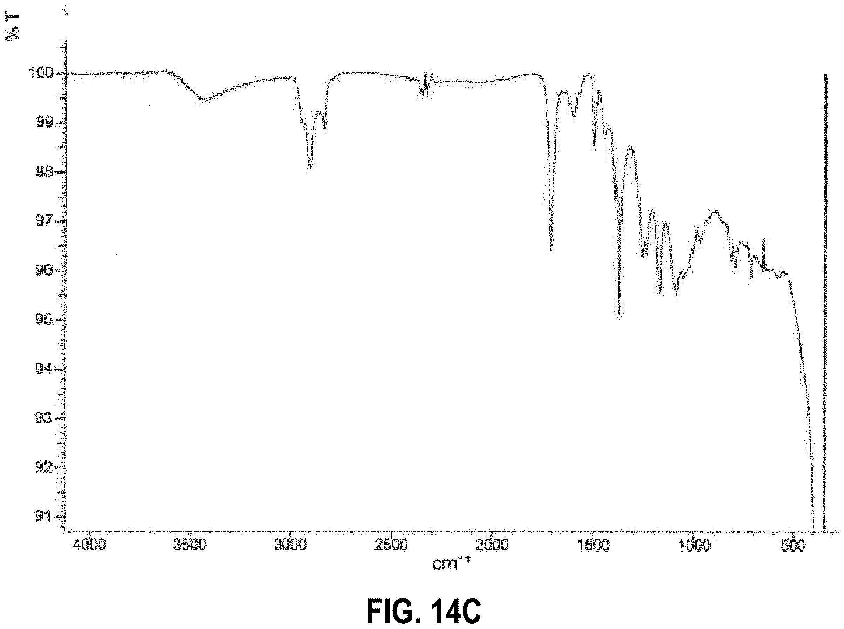

An aligner was manufactured without acid washing. Extraction vehicles (i.e., purified water, ethanol, and hexane) under similar conditions in the examples above were analyzed under FTIR. Those spectra are shown in Figs. 14A, 14B, and 14C.

While the present invention has been illustrated by the description of one or more embodiments thereof, and while the embodiments have been described in considerable detail, they are not intended to restrict or in any way limit the scope of the appended claims to such detail. The various features shown and described herein may be used alone or in any combination. Additional advantages and modifications will readily appear to those skilled in the art. The invention in its broader aspects is therefore not limited to the specific details, representative apparatus and methods and illustrative examples shown and described. Accordingly, departures may be made from such details without departing from the scope or spirit of Applicants' general inventive concept.

## Claims

1. A method for manufacturing a mold comprising:
3D printing the mold; and
acid treating the printed mold.

2. The method of claim 1, wherein 3D printing includes printing the mold in a bath of resin.

3. The method of claim 1 or claim 2, wherein 3D printing includes exposing a resin to UV radiation.

4. The method of claim 3, wherein the resin is a photosensitive acrylate-based polymer.

5. The method of any preceding claim, wherein acid treating includes exposing the printed mold to an acid solution.

6. The method of claim 5, wherein the acid solution includes acetic acid.

7. The method of any preceding claim wherein, following acid treating, the method further comprises:
heating liquid on the printed mold.

8. The method of claim 7, wherein heating includes exposing the liquid on the printed mold to heat from an infrared heater.

9. The method of any preceding claim wherein, following acid treating, the method further comprises:
curing the printed mold.

10. The method of any preceding claim, wherein the printed mold is a dental mold.

11. A system for manufacturing a mold comprising:
3D printing system configured to build the mold layer-by-layer from a resin; and
an acid treatment system configured to expose the printed mold to an acid solution.

12. The system of claim 11, wherein 3D printing system includes a bath of resin in which the printed mold is configured to be built.

13. The system of any of claims 11 or 12, wherein the 3D printing system includes a bath of the resin, and wherein the resin is a photosensitive acrylate-based polymer.

14. The system of claim 11, wherein the acid solution includes acetic acid.

15. The system of any of claims 11-14, wherein the mold is a dental mold.
